# EUROPÄISCHE PATENTSCHRIFT

(11) **EP 0 664 885 B1**
(45) Veröffentlichungstag und Bekanntmachung des Hinweises auf die Patenterteilung: **28.05.1997**
(21) Anmeldenummer: 92921460.9
(22) Anmeldetag: 13.10.1992
(51) Int. Cl.: G01N 33/538, G01N 33/543, G01N 30/48, G01N 30/02

(54) **IMMOBILISIERUNGSMATERIAL UND APPARATUR ZUR AFFINITÄTSCHROMATOGRAPHIE MIT MOBILER ORGANISCHER LÖSUNGSMITTELPHASE ODER REVERS MIZELLARER PHASE, IMMUNOASSAYS MIT DIESEM IMMOBILISIERUNGSMATERIAL**
IMMOBILISATION MATERIAL AND APPARATUS FOR AFFINITY CHROMATOGRAPHY WITH MOBILE ORGANIC SOLVENT PHASE OR REVERSE MICELLAR PHASE, IMMUNO ASSAYS WITH THIS IMMOBILISATION MATERIAL
MATERIAU D'IMMOBILISATION ET APPAREILLAGE POUR LA CHROMATOGRAPHIE PAR AFFINITE AVEC UNE PHASE DE SOLVANT ORGANIQUE MOBILE OU UNE PHASE MICELLAIRE INVERSE ET DOSAGES IMMUNOLOGIQUES EFFECTUES AVEC CE MATERIAU D'IMMOBILISATION

(43) Veröffentlichungstag der Anmeldung: 02.08.1995
(73) Patentinhaber: ABION Beteiligungs- und Verwaltungsgesellschaft mbH, 52428 Jülich (DE)
(72) Erfinder: MIETHE, Peter, D-4020 Halle (DE); ERHARDT, Ursula, D-8139 Bernried (DE); KABANOV, Alexander Victorovich, Moskau, 117298 (RU)
(74) Vertreter: Meyers, Hans-Wilhelm, Dr.Dipl.-Chem.
(86) Internationale Anmeldenummer: EP9202354
(87) Internationale Veröffentlichungsnummer: WO9409365

(56) Entgegenhaltungen:
- DE-A- 4 111 527
- ANALYTICAL BIOCHEMISTRY Bd. 181, Nr. 1, 15. August 1989, NEW YORK (US); Alexander V. KABANOV, Maria M. KHRUTSKAYA, Sergei A. EREMIN, Natalya L. KLYACHKO and Andrey V. LEVASHOV; pp. 145-148
- THE BIOCHEMICAL JOURNAL Bd. 207, Nr. 2, 1. November 1982, LONDON (GB); Mats PAULSSON and Dirk HEINEGARD; pp. 207-213
- JOURNAL OF BIOTECHNOLOGY Bd. 19, Nr. 1, Juni 1991, AMSTERDAM (NL); David SII and Ajit SADANA, pp. 83-98
- TENSIDE, SURFACTANTS; DETERGENTS Bd. 23, Nr. 1, Januar 1986, MÜNCHEN (DE); E. NUERNBERG UND N. P LLINGER; pp. 25-32
- JOURNAL OF THE SOCIETY OF COSMETIC CHEMISTS Bd. 19, 19. August 1968, NEW YORK (US); F.B. ROSEVAER ; pp. 581-594

## Beschreibung

Die Erfindung betrifft ein neues Immobilisierungsmaterial und eine Apparatur zur Affinitätschromatographie mit mobiler organischer Lösungsmittelphase oder revers mizellarer Phase. Die Erfindung bezieht sich weiterhin auf ein affinitätschromatographisches Verfahren, mit dem schlecht wasserlösliche Substanzen aus der organischen Lösungsmittelphase abgetrennt werden können, auf Immunoassays und Bindungstests mit diesem Immobilisierungsmaterial und auf die Verwendung von lyotropen Flüssigkristallen in affinitätschromatographischen Verfahren mit mobiler organischer Lösungsmittelphase oder revers mizellarer Phase.

Affinitätschromatographische Verfahren basieren auf Liganden-Bindungsreaktionen, d.h. auf der selektiven Reaktion einer Substanz eines biologisch/chemischen Bindungspaares mit dem komplementären spezifischen Partner/Liganden. Immunaffinitätschromatographischen Verfahren liegt eine Bindungsreaktion zwischen Antigenen und spezifischen Antikörpern zugrunde. Sie sind ein Spezialfall der Affinitätschromatographie. Antikörper können unter geeigneten Bedingungen gegen alle Proteine sowie gegen eine Vielzahl weiterer, auch niedermolekularer Substanzen (Haptene) hergestellt weden.

Auf der Basis immunochemischer Trennmethoden sind spezifische Reinigungs- und Analysenverfahren entwickelt worden. Letztere werden vielfältig in Medizin und Umwelttechnik in Form von Immunoassays eingesetzt. Entsprechende Testkits sind in einer breiten Vielfalt entwickelt worden, wobei man Tests ohne zusätzliche Markierungssubstanzen, Tests mit Markierungssubstanzen (Farbstoffe, radioaktive Label, Enzyme u.a.m.) unterscheiden kann.

Immunoassays und affinitätschromatographische Verfahren werden traditionell fast ausschließlich in wäßrigen Systemen, d.h. in für Immunreaktionen bzw. Bindungsreaktionen natürlichem Umfeld durchgeführt. Immunochemische Trennverfahren mit mobiler organischer Phase sind dann von praktischer Bedeutung, wenn die zu trennenden oder zu analysierenden Substanzen wasserunlöslich oder anderweitig in Wasser schlecht handhabbar sind. Eine konventionelle Methode zur Umgehung von Löslichkeitsproblemen bei Immunoassays ist der Zusatz von Löslichkeitsvermittlern wie
- wassermischbaren Lösungsmitteln (Schmidt, D.J., Clarkson, C.E., Swanson, T.A., Egger, M.L., Carlson, R.E., Van Emon, J.M., Karu, A.E. (1990), J. Agric. Food chem. 38 (8), 1763-1770),
- Tensiden (Paulson, M., Heinegard, D. (1982), Biochem. J. 207, 207-213),
- Cyclodextrinen (Jap. Patent J 01153961-A (1989)).

Weitaus günstiger wäre der Einsatz von apolaren organischen Lösungsmitteln. Apolare Lösungsmittel sind jedoch allgemein als proteindenaturierend bekannt. Nach bisheriger Vorgehensweise war deshalb eine Lösungsmittelextraktion der Proben, wobei zusätzlich eventuell störende hydrophile Verbindungen, insbesondere nicht-immunogene Proteine entfernt werden können, strikt getrennt vom spezifischen Bindungstest. Im US-Patent 4,250,162 (1981) können diese organischen Lösungsmittelproben direkt in konventionelle, mit Antikörpern beschichtete Glasröhrchen gegeben und nach Verdampfen des Lösungsmittels und Wasserzusatz in an sich bekannter Weise immunochemisch analysiert werden.

Es ist weiterhin gezeigt worden, daß ein Verdampfungsschritt zur Entfernung des organischen Lösungsmittels entfallen kann, wenn die immunochemische Reaktion mit an einer "Immunodyne"-Membran kovalent immobilisierten Antikörpern direkt im organischen Lösungsmittel durchgeführt wird (Stöcklein, W., Gebbert, A., Schmid, R.D. (1990), Anal. Lett. 23 (8), 1465-1476). Auch bei dieser Verfahrensweise ist der Antikörper in Kontakt mit dem Lösungsmittel, so daß die Bindungsaffinität stark beeinträchtigt und die Bindungskapazität nur gering ist.

Es ist weiterhin bekannt, daß apolare Lösungsmittel vorteilhaft zur Extraktion nicht gebundener Hapten-Marker-Konjugate bei kompetitiven Assaymethoden verwendet werden können (UK-Patent 2,103,790 A (1980), Mariet, F., Brossier, P. (1990), Res. Commun. Chem. Pathol. Pharmacol. 68 (2) , 251-262). Diese Methodik illustriert, daß mit biphasigen Systemen vom Typ organisches Lösungsmittel/Wasser Immunoassays aufgebaut werden können, wobei aber die Probleme der Löslichkeit und die Funktionsbeeinträchtigung von Antikörpern unberücksichtigt bleiben.

Der Einsatz von Reversmizellen (Mikroemulsionen Wasser/organisches Lösungsmittel) ist eine weitere Möglichkeit, einen Immunoassay in einem apolaren Lösungsmittel durchzuführen (Kabanov, A.V., Khrotskaya, M.M., Eremin, S.A., Klyachko, N.L., Levashov, A.V. (1989), Anal. Biochem. 181, 145-148). In diesem Fall werden die Assayproteine im "Waterpool" einer Reversmizelle solubilisiert. Sowohl die Immunreaktion als auch die enzymatische Nachweisreaktion können auf diese Weise in einer organischen Lösungsmittelphase ausgeführt werden. Damit kann ein homogener Immunoassay realisiert werden, der jedoch für den praktischen Einsatz nur sehr bedingt geeignet ist, da das Messergebnis von der präzisen Einhaltung des Mizelldurchmessers abhängig ist. Der Mizelldurchmesser verändert sich bereits bei sehr kleinen Änderungen der Wasserkonzentration im System, die allein schon durch den schwankenden Wassergehalt im Analyten auftreten können, so daß eine quantitative Bestimmung schwer reproduzierbar ist.

Aufgabe der vorliegenden Erfindung ist es, ein Immobilisierungsmaterial zu finden, mit dem affinitätschromatographische Verfahren mit mobiler organischer Lösungsmittelphase oder revers mizellarer Phase durchgeführt werden können, wobei die Substanzen direkt aus der organischen Lösungsmittelphase selektiv und mit hoher Bindungskapazität abgetrennt werden sollen, ohne daß dabei Löslichkeitsprobleme und Beeinträchtigungen von Bindungsaffinitäten der Biomoleküle durch die organische Lösungsmittelphase auftreten. Außerdem soll die Immobilisierung der Biomoleküle in einfacher Weise ohne Kopplungsaufwand durchführbar sein. Das affinitätschromatographische Verfahren soll mit diesem Immobilisierungsmaterial für reproduzierbare und in der Handhabung einfache Bindungstests, Immunoassays und präparative Reinigungsverfahren anwendbar sein.

Die Aufgabe der Erfindung wird durch ein Immobilisierungsmaterial gelöst, das aus einem lyotropen Flüssigkristall oder einem Mikroemulsionsgel oder einer Mischung aus einem lyotropen Flüssigkristall oder einem Mikroemulsionsgel mit einem üblichen inerten Trägermaterial besteht. Erfindungsgemäß werden die bindungsaktiven Komponenten wie zum Beispiel Antikörper, Antigene, Haptene, Liganden, Rezeptoren, Enzyme, Hormone, andere biologische Bindungspartner und deren Konjugate in dem lyotropen Flüssigkristall oder dem Mikroemulsionsgel solubilisiert. Die Zufuhr der zu trennenden Stoffe erfolgt über die mit dem lyotropen Flüssigkristall oder Mikroemulsionsgel koexistierende Lösungsmittelphase oder revers mizellare Phase.

Lyotrope Flüssigkristalle oder Mikroemulsionsgele sind Aggregate (Kugeln, Lamellen, stäbchen), die von Tensiden, Seifen, Phospholipiden oder Glyceriden in Wasser und/oder organischen Lösungsmitteln gebildet werden. Mikroskopisch lassen sich genau definierte Anordnungen z.B. der Tensidaggregate unterscheiden. Es gibt hexagonale, kubische und lamellare Phasen. Sind diese Strukturen nicht derart hoch geordnet, spricht man von Mikroemulsionsgelen (Nürnberg, E., Pöllinger, N., in "Tenside Detergents" 23 (1986), 25-32). Im Gegensatz zu Reversmizellen, die makroskopisch klare Lösungen sind, existiert in lyotropen Flüssigkristallen und Mikroemulsionsgelen eine starke Wechselwirkung bzw. Überlappung zwischen den Aggregaten, was makroskopisch eine "gelartige" Konsistenz mit extremer Erhöhung der Grenzflächen zu den Waterpools erzeugt (Rosevar, F.B. (1968), J. Soc. Cos. Chem. 19, 581-594). In diese "Waterpools" können Biopolymere eingelagert, d.h, solubilisiert und vor den organischen Lösungsmitteln geschützt werden. So bleibt deren Bindungsaffinität unbeeinträchtigt.

Erfindungsgemäß werden als lyotrope Flüssigkristalle oder Mikroemulsionsgele bevorzugt Tensidaggregate eingesetzt.

Da lyotrope Flüssigkristalle mikroheterogene Systeme sind, ist die spezifische Grenzfläche sehr groß. Durch den erfindungsgemäßen Zusatz von inerten Trägermaterialien wird sie weiter vergrößert, was zur Erhöhung der Bindungskapazität und der Reaktionsgeschwindigkeit (keine langen Diffusionswege) führt und verbunden ist mit erheblicher Verbesserung von Nachweisgrenze und Testzeit.

Die Herstellung und Handhabung der Systeme aus lyotropem Flüssigkristall und Lösungsmittel LC/LM und lyotropem Flüssigkristall und Reversmizellen LC/RM ist sehr einfach und reproduzierbar.

Man geht zweckmäßigerweise von einer Stammlösung eines Tensides in einem organischen Lösungsmittel aus und setzt wäßrige Lösungen mit einem bindungsaktiven Partner und eventuell Konjugatpufferlösungen zu. Nach kurzem Schütteln erhält man dann bei gegebenen Konzentrationsverhältnissen LC/LM oder LC/RM oder reine LC- oder reine RM-Systeme. Die exakte Zusammensetzung muß in entsprechenden Vorversuchen ermittelt werden, sofern sie nicht der kolloidchemischen Literatur (ternäre Phasendiagramme Tensid/organisches Lösungsmittel/Wasser) entnommen werden kann. Die "gelartige" Konsistenz der lyotropen Flüssigkristalle oder Mikroemulsionen ermöglicht die Handhabung der solubilisierten Reaktivpartner oder Liganden wie an einer Festphase immobilisierte Reaktivpartner oder Liganden in einem heterogenen Bindungstest oder heterogenen Immunoassay. Der erfindungsgemäße Vorteil besteht jedoch darin, daß die Immobilisierung ohne Kopplungsaufwand allein durch Mischung zustande kommt.

Gegenstand der Erfindung ist auch eine Apparatur zur Affinitätschromatographie mit mobiler organischer Lösungsmittelphase oder revers mizellarer Phase gemäß Anspruch 13. Die stationären, flüssigkristallinen und die dazugehörigen mobilen Phasen können in der üblichen Art und Weise in Chromatographiesäulen, Mikrotiterplatten oder anderen Reaktionsgefäßen miteinander inkubiert werden. Über die mobile, mit dem lyotropen Flüssigkristall/Mikroemulsionsgel koexistierende Lösungsmittel- oder revers mizellare Phase erfolgt die Zufuhr der zu trennenden Substanzen. An der Grenzfläche zwischen stationärer und mobiler Phase findet dann die Bindungsreaktion statt.

Die Anwendung von lyotropen Flüssigkristallen in dem erfindungsgemäßen affinitätschromatographischen Verfahren der Ansprüche 15 bis 24 hat den Vorteil, daß eine Trennung der stationären und mobilen Phasen mit anschließender Aufarbeitung bzw. Quantifizierung alternativ in der mobilen oder stationären Phase erfolgen kann. Für die Analyse oder Aufarbeitung der mobilen Phase können die bekannten, bei heterogenen Bindungstests oder Immunoassays und säulenchromatographischen Reinigungsverfahren anwendbaren Methoden eingesetzt werden.

Zur Analyse oder Aufarbeitung der stationären flüssigkristallinen Phase kann diese durch Zusatz geringer Mengen eines Lösungsmittels wie beispielsweise Ethanol, Butylacetat oder Salzlösungen oder durch Druck- oder Temperaturerhöhung in eine revers mizellare Phase oder echte Lösung überführt werden. Dadurch ist es möglich, den zu messenden Analyten in hochkonzentrierter Form und quantitativ ohne Elutionsschritt in eine mobile Phase zu überführen. So wird auf einfache Weise eine Verbesserung der Nachweisgrenze erreicht. Die flüssige Phase kann dann in üblicher Weise analysiert oder weiter aufgearbeitet werden.

Gegenstand der Erfindung sind auch Immunoassays und Reagenzien mit dem erfindungsgemäßen Immobilisierungsmaterial als stationäre Phase gemäß der Ansprüche 3 bis 12.

Zur Trennung von hydrophoben niedermolekularen Verbindungen, beispielsweise in einem Festphasenimmunoassay, eignen sich insbesondere Systeme vom Typ LC/LM. Biopolymere wie Antikörper werden im lyotropen Flüssigkristall solubilisiert und die übrigen Komponenten in der Lösungsmittelphase gelöst. Auf diese Weise können einfache Immunofluoreszenz- oder Radioimmunoassays realisiert werden.

Bei Systemen vom Typ LC/RM können sowohl in der stationären LC-Phase als auch in der mobilen RM-Phase höhermolekulare Biopolymere wie Antikörper, Antigene, Liganden, entsprechende Konjugate - insbesondere solche mit Enzymen - solubilisiert und entsprechend getrennt werden. Die Technik ist besonders geeignet für die Herstellung von ELISAs (Enzyme Linked Immuno Sorbent Assay).

Nachfolgend wird die Erfindung anhand von Beispielen beschrieben:

### Ausführungsbeispiele

### Beispiel 1

100 mg Brij® 35 (SERVA) werden in 1 ml Dibutylether 20 min im Ultraschallbad homogenisiert. Anschließend gibt man 120 µl einer 1 mM Lösung monoklonaler Antikörper gegen Dofamin zu. Nach Schütteln erhält man etwa 200 mg lyotropen Flüssigkristall mit kubischer Phasenstruktur in Dibutylether. Dieses biphasige System wird mit 1 ml Glaskugeln (d = 0,2 mm) versetzt, und nach kurzem Schütteln wird damit eine 2 ml Glassäule (D = 4 mm) gefüllt. Die Säule wird mit 5 ml wassergesättigtem Dibutylether gewaschen und anschließend 20 min mit 2 ml einer 10 µM Lösung eines Dofamin-Fluoreszeinthioisocyanat-Konjugates in wassergesättigtem Dibutylether equilibriert. Anschließend wird mit 5 ml wassergesättigtem Dibutylether gewaschen.
1 a) Gibt man auf die so präparierte Säule 1 ml einer 10 µM Dofamin-Lösung in wassergesättigtem Dibutylether und spült mit 5 ml Dibutylether, so erfolgt ein Farbumschlag im Flüssigkristall von orange nach farblos. Bei Verwendung einer UV-Lampe läßt sich qualitativ ein Verschwinden der Fluoreszenz im Flüssigkristall nachweisen.
1 b) Verwendet man entsprechend Eichlösungen mit Konzentrationen zwischen 1nm und 100 nM und fängt die Waschlösung auf, so kann eine Eichkurve für Dofamin erstellt werden, wenn die Fluoreszenzintensität bei 517 nm bei einer Anregungswellenlänge von 498 nm gemessen wird.

### Beispiel 2

a) Es wird eine 10 Gew.-% Stammlösung von Prävozell® KREO7 (Chemische Werke BUNA) in Hexan hergestellt. Zu 1 ml dieser Lösung gibt man 50 µl einer 1 mM Antikörperlösung gegen Insulin und 50 µl einer 1 mM Lösung von radioaktiv markiertem (J125) Insulin. Nach Schütteln entsteht ein lyotroper Flüssigkristall im Gleichgewicht mit einer revers mizellaren Phase. Das System wird mit 0,9 ml nichtporösen Glaskugeln (d = 0,5 mm) versetzt und in eine 2 ml Glassäule gefüllt. Anschließend spült man mit 3 ml revers mizellarer Phase, die hergestellt wird, indem zu 3 ml einer 2 Gew.-% Stammlösung von KREO7 in Hexan 5 µl Phosphatpufferlösung gegeben werden.
   Entsprechend werden auch revers mizellare Eichlösungen von Insulin hergestellt, indem an Stelle von Puffer Insulinlösungen mit Konzentrationen zwischen 1 nM und 100 nM verwendet werden. Die Säule wird mit jeweils 2 ml dieser Eichlösungen 30 min equilibriert. Anschließend wird diese Lösung aufgefangen und mit einem Betacounter vermessen. Man erhält eine Eichkurve, mit der entsprechend unbekannte Insulinkonzentrationen bestimmt werden können.
b) Man verfährt wie unter a) beschrieben. Nach der Equilibrierung wird aber mit 3 ml revers mizellarer Waschlösung gespült. Anschließend wird der Flüssigkristall durch Zugabe von 5 ml Aceton aufgelöst, und diese Lösung wird vermessen.

### Beispiel 3

2,80 g Cetyltrimethylammoniumbromid (CTAB) werden mit 3,20 ml einer Lösungsmittelmischung Chloroform/Heptan (Vol. 1/1) versetzt. Anschließend werden 4,0 ml Wasser zugegeben. Das Gemisch wird auf 70 °C erwärmt und mit einem Vortexmixer homogenisiert. Es entsteht ein lamellarer Flüssigkristall. Zu diesem wird 1,0 ml einer 1 mM Antikörperlösung gegen Insulin gegeben. Anschließend wird bei Zimmertemperatur mit Hilfe eines Vortexmixers homogenisiert.
Jeweils 100 µl dieses Flüssigkristalls werden in die 96 Löcher einer Mikrotiterplatte gefüllt. Anschließend wird die Mikrotiterplatte 15 min auf einem Horizontalschüttler (40 rpm) gelagert, um eine glatte Flüssigkristalloberfläche herzustellen.

Anschließend wird die Platte mit revers mizellarer Waschlösung gespült, die hergestellt wird, indem 7,5 g CTAB mit 12,5 ml Puffer (PBS, pH = 7,4) und 27,2 ml Chloroform/Heptan (1/1) gemischt werden.
Entsprechend stellt man Eichlösungen her, die jeweils konstant 10 nM Insulin-Peroxydase Konjugate und 0,1 nM bis 100 nM Insulin enthalten. Von diesen Eichlösungen werden jeweils 200 µl mit einer Flüssigkristallprobe in der Mikrotiterplatte 60 min equilibriert. Anschließend wird der revers mizellare Überstand entfernt und wie oben beschrieben mit revers mizellarer Lösung gewaschen. Im nächsten Schritt wird durch Zugabe von jeweils 41 µl Chloroform/Heptan der jeweilige Flüssigkristall aufgelöst, d.h. in den revers mizellaren Zustand überführt. Durch Zugabe von H₂O₂ (0,03% bezogen auf revers mizellare Phase) und ABTS (220 µl/ml) wird die Enzymreaktion gestartet, die mit einem Multiscanphotometer nach 30 min Inkubationszeit bei 405 nm quantitativ ausgewertet wird.

## Patentansprüche

1. Material zur Affinitätschromatographie mit mobiler organischer Lösungsmittelphase oder revers mizellarer Phase, bestehend aus einem lyotropen Flüssigkristall oder einem Mikroemulsionsgel oder einer Mischung aus einem lyotropen Flüssigkristall oder einem Mikroemulsionsgel mit einem üblichen inerten Trägermaterial, dadurch **gekennzeichnet**, daß es bindungsaktive Substanzen wie Antikörper, Antigene, Haptene, Liganden, Rezeptoren, Enzyme, Hormone oder andere biologische Bindungspartner oder deren Konjugate enthält.

2. Material nach Anspruch 1, dadurch **gekennzeichnet,** daß es als lyotropen Flüssigkristall oder Mikroemulsionsgel Tensidaggregate enthält.

3. Verwendung von einem lyotropen Flüssigkristall oder einem Mikroemulsionsgel oder einer Mischung aus einem lyotropen Flüssigkristall oder einem Mikroemulsionsgel mit einem üblichen inerten Trägermaterial als Immobilisierungsmaterial und als koexistierende Phase eine organische Lösungsmittelphase oder eine revers mizellare Phase, in einem Immunoassay.

4. Verwendung nach Anspruch 3, dadurch **gekennzeichnet,** daß ein im lyotropen Flüssigkristall oder Mikroemulsionsgel immobilisierter Antikörper und ein in der koexistierenden organischen Lösungsmittelphase lösliches Antigen- oder Hapten-Marker-Konjugat zur Bestimmung eines ebenfalls in der organischen Lösungsmittelphase löslichen Antigens oder Haptens verwendet wird.

5. Verwendung nach Anspruch 3, dadurch **gekennzeichnet,** daß ein im lyotropen Flüssigkristall oder Mikroemulsionsgel immobilisierter Antikörper und in der koexistierenden revers mizellaren Phase solubilisierte oder solubilisierbare Assaykomponenten zur Bestimmung eines ebenfalls in der revers mizellaren Phase solubilisierten Antigens oder Haptens verwendet wird.

6. Verwendung nach Anspruch 3, dadurch **gekennzeichnet,** daß ein im lyoptropen Flüssigkristall oder Mikroemulsionsgel immobilisiertes Antigen oder Hapten und in der koexistierenden revers mizellaren Phase solubilisierte oder solubilisierbare Antikörper und weitere Assaykomponenten zur Bestimmung eines ebenfalls in der revers mizellaren Phase solubilisierten Antigens oder Haptens verwendet wird.

7. Verwendung nach Anspruch 3, dadurch **gekennzeichnet,** daß als lyotroper Flüssigkristall ein Tensidaggregat verwendet wird.

8. Immunoassayreagenz mit einem Immobilisierungsmaterial umfassend einen lyotropen Flüssigkristall oder ein Mikroemulsionsgel oder eine Mischung aus einem lyotropen Flüssigkristall oder einem Mikroemulsionsgel mit einem üblichen inerten Trägermaterial und als koexistierende Phase eine organische Lösungsmittelphase oder eine revers mizellare Phase, dadurch **gekennzeichnet,** daß es einen im lyotropen Flüssigkristall oder Mikroemulsionsgel immobilisierten Antikörper und ein der koexistierenden organischen Lösungsmittelphase lösliches Antigen- oder Hapten-Marker-Konjugat zur Bestimmung eines ebenfalls in der organischen Lösungsmittelphase löslichen Antigens oder Haptens umfaßt.

9. Immunoassayreagenz nach Anspruch 8, dadurch **gekennzeichnet,** daß es einen im lyotropen Flüssigkristall oder Mikroemulsionsgel immobilisierten Antikörper und in der koexistierenden revers mizellaren Phase solubilisierte oder solubilisierbare Assaykomponenten zur Bestimmung eines ebenfalls in der revers mizellaren Phase solubilisierten Antigens oder Haptens umfaßt.

10. Immunoassayreagenz nach Anspruch 8, dadurch **gekennzeichnet,** daß es ein im lyoptropen Flüssigkristall oder Mikroemulsionsgel immobilisiertes Antigen oder Hapten und in der koexistierenden revers mizellaren Phase solubilisierte oder solubilisierbare Antikörper und weitere Assaykomponenten zur Bestimmung eines ebenfalls in der revers mizellaren Phase solubilisierten Antigens oder Haptens umfaßt.

11. Immunoassayreagenz nach Anspruch 8, dadurch **gekennzeichnet,** daß es als lyotropen Flüssigkristall ein Tensidaggregat enthält.

12. Immunoassaykit enthaltend ein Immunoassayreagenz nach einem der Ansprüche 8 bis 11.

13. Apparatur zur Affinitätschromatographie mit mobiler organischer Lösungsmittelphase oder revers mizellarer Phase, enthaltend als stationäre Phase zur Immobilisierung der bindungsaktiven Substanzen einen lyotropen Flüssigkristall oder ein Mikroemulsionsgel oder eine Mischung aus einem lyotropen Flüssigkristall oder einem Mikroemulsionsgel mit einem üblichen inerten Trägermaterial.

14. Apparatur nach Anspruch 13, dadurch **gekennzeichnet,** daß sie eine Chromatographiesäule, eine Mikrotiterplatte oder ein anderes Inkubationsgefäß umfaßt.

15. Affinitätschromatographisches Verfahren mit mobiler organischer Lösungsmittelphase oder revers mizellarer Phase, dadurch **gekennzeichnet,** daß zur Immobilisierung von bindungsaktiven Substanzen als stationäre Phase ein lyotroper Flüssigkristall oder ein Mikroemulsionsgel oder eine Mischung aus einem lyotropen Flüssigkristall oder einem Mikroemulsionsgel mit einem üblichen inerten Trägermaterial verwendet wird, das mit der organischen Lösungsmittelphase oder der revers mizellaren Phase, in der der zu untersuchende Bindungspartner solubilisiert wird, koexistiert, wobei eine Quantifizierung oder weitere Aufarbeitung entweder in dieser mobilen Phase oder nach Ablösung von der stationären Phase oder in der stationären Phase vorgenommen wird.

16. Verfahren nach Anspruch 15, dadurch **gekennzeichnet,** daß es in an sich bekannter Weise zur Durchführung von Immunoassays, Bindungstests und präparativen Reinigungen eingesetzt wird.

17. Verfahren nach den Ansprüchen 15 und 16, dadurch **gekennzeichnet,** daß mit dem affinitätschromatographischen Verfahren ein heterogener Immunoassay ausgeführt wird und eine Quantifizierung der immunospezifisch an die stationäre Phase gebundenen Substanz(en) erfolgt, indem nach Trennung von mobiler und stationärer Phase die stationäre Phase durch Zugabe weiterer Substanzen oder durch Änderung der Temperatur oder des Druckes in eine flüssige Phase überführt wird.

18. Verfahren nach den Ansprüchen 15 bis 17, dadurch **gekennzeichnet,** daß zur Durchführung eines Immunoassays ein Antikörper im lyotropen Flüssigkristall oder Mikroemulsionsgel immobilisiert wird und ein in der koexistierenden organischen Lösungsmittelphase lösliches Antigen oder Hapten-Marker-Konjugat zur Bestimmung eines ebenfalls in der organischen Lösungsmittelphase löslichen Antigens oder Haptens verwendet wird.

19. Verfahren nach den Ansprüchen 15 bis 17, dadurch **gekennzeichnet,** daß zur Durchführung eines Immunoassays ein Antikörper im lyotropen Flüssigkristall oder Mikroemulsionsgel immobilisiert wird und in der koexistierenden revers mizellaren Phase solubilisierte oder solubilisierbare Assaykomponenten zur Bestimmung eines ebenfalls in der revers mizelaren Phase solubilisierten Antigens oder Haptens verwendet werden.

20. Verfahren nach den Ansprüchen 15 bis 17, dadurch **gekennzeichnet,** daß zur Durchführung eines Immunoassays ein Antigen oder Hapten im lyotropen Flüssigkristall oder Mikroemulsionsgel immobilisiert wird und in der koexistierenden revers mizellaren Phase solubilisierte oder solubilisierbare Antikörper und weitere Assaykomponenten zur Bestimmung eines ebenfalls in der revers mizellaren Phase solubilisierten Antigens oder Haptens verwendet werden.

21. Verfahren nach den Ansprüchen 15 und 16, dadurch **gekennzeichnet,** daß mit dem affinitätschromatographischen Verfahren ein Reinigungsverfahren realisiert wird, bei dem die Aufarbeitung einer affinitätsspezifisch an die stationäre Phase gebundenen Substanz erfolgt, indem nach Trennung von mobiler und stationärer Phase die stationäre Phase durch Zugabe weiterer Substanzen oder durch Änderung der Temperatur oder des Druckes in eine flüssige Phase überführt wird.

22. Verfahren nach den Ansprüchen 15, 16 und 21, dadurch **gekennzeichnet,** daß zur Durchführung eines affinitätschromatographischen Reinigungsverfahrens der eine bindungsaktive Reaktivpartner im lyotropen Flüssigkristall oder Mikroemulsionsgel immobilisiert wird und der andere Reaktivpartner aus der koexistierenden Lösungsmittelphase oder revers mizellaren Phase spezifisch abgetrennt wird.

23. Verfahren nach den Ansprüchen 15 bis 17 und 21, dadurch **gekennzeichnet,** daß die Bestimmung des zu untersuchenden Bindungspartners in der stationären Phase vorgenommen wird durch Auflösung des lyotropen Flüssigkristalls oder Mikroemulsionsgels unter Ausnutzung der Entstehung oder Freisetzung eines detektierbaren Farbstoffs.

24. Verfahren nach den Ansprüchen 15 bis 23, dadurch **gekennzeichnet,** daß eine Mischung eines lyotropen Flüssigkristalls oder eines Mikroemulsionsgels mit einem üblichen festen Trägermaterial eingesetzt wird.

## Claims

1. A material for affinity chromatography with an organic solvent mobile phase or reverse micellar mobile phase, consisting of a lyotropic liquid crystal, or a microemulsion gel, or a mixture of a lyotropic liquid crystal or a microemulsion gel with a common inert support material, characterized by containing binding-active substances, such as antibodies, antigens, haptens, ligands, receptors, enzymes, hormones or other biological binding partners or their conjugates.

2. The material according to claim 1, characterized by containing surfactant aggregates as said lyotropic liquid crystal or microemulsion gel.

3. Use of a lyotropic liquid crystal, or a microemulsion gel, or a mixture of a lyotropic liquid crystal or a microemulsion gel with a common inert support material as an immobilizing material and of an organic solvent phase or a reverse micellar phase as the coexisting phase in an immunoassay.

4. The use according to claim 3, characterized in that an antibody immobilized in said lyotropic liquid crystal or microemulsion gel and an antigen/marker or hapten/marker conjugate which is soluble in said coexisting organic solvent phase are used for the determination of an antigen or hapten which is also soluble in said organic solvent phase.

5. The use according to claim 3, characterized in that an antibody immobilized in said lyotropic liquid crystal or microemulsion gel and assay components solubilized or solubilizable in said coexisting reverse micellar phase are used for the determination of an antigen or hapten which is also solubilized in said reverse micellar phase.

6. The use according to claim 3, characterized in that an antigen or hapten immobilized in said lyotropic liquid crystal or microemulsion gel and antibodies and other assay components solubilized or solubilizable in said coexisting reverse micellar phase are used for the determination of an antigen or hapten which is also solubilized in said reverse micellar phase.

7. The use according to claim 3, characterized in that a surfactant aggregate is used as said lyotropic liquid crystal.

8. An immunoassay reagent including an immobilization material comprising a lyotropic liquid crystal, or a microemulsion gel, or a mixture of a lyotropic liquid crystal or a microemulsion gel with a common inert support material, and an organic solvent phase or a reverse micellar phase as the coexisting phase, characterized by comprising an antibody immobilized in said lyotropic liquid crystal or microemulsion gel and an antigen/marker or hapten/marker conjugate which is soluble in said coexisting organic solvent phase for the determination of an antigen or hapten which is also soluble in said organic solvent phase.

9. The immunoassay reagent according to claim 8, characterized by comprising an antibody immobilized in said lyotropic liquid crystal or microemulsion gel and assay components solubilized or solubilizable in said coexisting reverse micellar phase for the determination of an antigen or hapten which is also solubilized in said reverse micellar phase.

10. The immunoassay reagent according to claim 8, characterized by comprising an antigen or hapten immobilized in said lyotropic liquid crystal or microemulsion gel and antibodies and other assay components solubilized or solubilizable in said coexisting reverse micellar phase for the determination of an antigen or hapten which is also solubilized in said reverse micellar phase.

11. The immunoassay reagent according to claim 8, characterized by containing a surfactant aggregate as said lyotropic liquid crystal.

12. An immunoassay kit, containing an immunoassay reagent according to any of claims 8 to 11.

13. A device for affinity chromatography with an organic solvent mobile phase or a reverse micellar mobile phase, containing a lyotropic liquid crystal, or a microemulsion gel, or a mixture of a lyotropic liquid crystal or a microemulsion gel with a common inert support material as the stationary phase for immobilizing the binding-active substances.

14. The device according to claim 13, characterized by comprising a chromatographical column, a microtitration plate or another incubation recipient.

15. An affinity chromatographical method involving an organic solvent mobile phase or a reverse micellar mobile phase, characterized in that a lyotropic liquid crystal, or a microemulsion gel, or a mixture of a lyotropic liquid crystal or a microemulsion gel with a common inert support material is used as the stationary phase for immobilizing binding-active substances which coexists with said organic solvent phase or reverse micellar phase in which the binding partner to be examined is solubilized wherein a quantification or further processing is performed either in said mobile phase or after separation from said stationary phase, or in said stationary phase.

16. The method according to claim 15, characterized by being employed in a per se known manner for performing immunoassays, binding assays and preparative purifications.

17. The method according to claims 15 and 16, characterized in that a heterogeneous immunoassay is performed with said affinity chromatographical method, and a quantification of the substance(s) immunospecifically bound to the stationary phase is performed by converting the stationary phase, after separation of the mobile and stationary phases, to a liquid phase by the addition of further substances or by changing the temperature or pressure.

18. The method according to claims 15 to 17, characterized in that for performing an immunoassay, an antibody is immobilized in said lyotropic liquid crystal or microemulsion gel, and an antigen/marker or hapten/marker conjugate which is soluble in said coexisting organic solvent phase is used for the determination of an antigen or hapten which is also soluble in said organic solvent phase.

19. The method according to claims 15 to 17, characterized in that for performing an immunoassay, an antibody is immobilized in said lyotropic liquid crystal or microemulsion gel, and assay components solubilized or solubilizable in said coexisting reverse micellar phase are used for the determination of an antigen or hapten which is also solubilized in said reverse micellar phase.

20. The method according to claims 15 to 17, characterized in that for performing an immunoassay, an antigen or hapten is immobilized in said lyotropic liquid crystal or microemulsion gel, and antibodies and other assay components solubilized or solubilizable in said coexisting reverse micellar phase are used for the determination of an antigen or hapten which is also solubilized in said reverse micellar phase.

21. The method according to claims 15 and 16, characterized in that with said affinity chromatographical method, a purification method is realized in which the further processing of a substance affinity-specifically bound to the stationary phase is performed by converting the stationary phase, after separation of the mobile and stationary phases, to a liquid phase by the addition of further substances or by changing the temperature or pressure.

22. The method according to claims 15, 16 and 21, characterized in that for performing an affinity chromatographical purification method, one binding-active reactive partner is immobilized in said lyotropic liquid crystal or microemulsion gel, and the other reactive partner is specifically separated from said coexisting solvent phase or reverse micellar phase.

23. The method according to claims 15 to 17 and 21, characterized in that the determination of the binding partner to be examined is performed in the stationary phase by dissolving said lyotropic liquid crystal or microemulsion gel and utilizing the generation or release of a detectable colorant.

24. The method according to claims 15 to 23, characterized in that a mixture of a lyotropic liquid crystal or a microemulsion gel with a common inert support material is employed.

## Revendications

1. Matériau pour la chromatographie d'affinité ayant une phase mobile de solvant organique ou une phase micellaire inverse, consistant en un cristal liquide lyotrope, ou bien en un gel en microémulsion, ou bien encore en un mélange soit, d'un cristal liquide lyotrope, soit d'un gel en microémulsion, et d'un support inerte conventionnel, caractérisé en ce que ledit matériau contient des produits actifs de liaison, tels des anticorps, antigènes, haptènes, ligands, récepteurs, enzymes, hormones ou d'autres membres de liaison biologiques, ou leurs conjugués.

2. Matériau selon la revendication 1, caractérisé en ce que celui-ci contient en tant que cristal liquide lyotrope ou en tant que gel en microémulsion, des agrégats d'agent tensio-actif.

3. Utilisation d'un cristal liquide lyotrope ou d'un gel en microémulsion ou bien d'un mélange à base soit d'un cristal liquide lyotrope, soit d'un gel en microémulsion, et d'un support inerte conventionnel en tant que matériau d'immobilisation, ainsi qu'une phase de solvant organique ou bien une phase micellaire inverse en tant que phase coexistante, dans un essai immunologique.

4. Utilisation selon la revendication 3, caractérisée en ce qu'un anticoprs immobilisé, soit dans le cristal liquide lyotrope, soit dans le gel en microémulsion, ainsi qu'un conjugué d'haptène marqué ou un conjugué d'antigène marqué, respectivement solubles dans la phase coexistante de solvant organique, sont utilisés pour la détermination d'un antigène ou d'un haptène l'un et l'autre également solubles dans la phase de solvant organique.

5. Utilisation selon la revendication 3, caractérisée en ce qu'un anticorps immobilisé soit dans le cristal liquide lyotrope soit dans le gel en microémulsion, ainsi que des composants pour essais solubilisés ou susceptibles d'être solubilisés dans la phase micellaire inverse coexistante, sont utilisés pour la détermination d'un antigène ou d'un haptène, l'un et l'autre également solubilisés dans la phase micellaire inverse.

6. Utilisation selon la revendication 3, caractérisée en ce qu'un antigène ou un haptène immobilisé soit dans le cristal liquide lyotrope, soit dans le gel en microémulsion, ainsi que des anticorps solubilisés ou susceptibles d'être solubilisés dans la phase micellaire inverse coexistante, et d'autres composants immunoessais, sont utilisés pour la détermination d'un antigène ou d'un haptène, l'un et l'autre également solubilisés dans la phase micellaire inverse.

7. Utilisation selon la revendication 3, caractérisée en ce qu'un agrégat d'agent tensio-actif est utilisé en tant que cristal liquide lyotrope.

8. Réactif pour immunoessai ayant un matériau d'immobilisation, comprenant soit un cristal liquide lyotrope, soit un gel en microémulsion, ou bien un mélange à base d'un cristal liquide lyotrope, ou d'un gel en microémulsion ainsi que d'un support conventionnel, et en tant que phase coexistante, une phase de solvant organique ou une phase micellaire inverse, caractérisé en ce que ledit réactif pour immunoessais comprend, un anticorps immobilisé, soit dans le cristal liquide lyotrope, soit dans le gel en microémulsion, ainsi qu'un conjugué d'haptène marqué ou un conjugué d'antigène marqué solubles dans la phase coexistante de solvant organique, pour la détermination d'un antigène ou d'un haptène, l'un et l'autre également solubles dans la phase de solvant organique.

9. Réactif pour immunoessai selon la revendication 8, caractérisé en ce qu'il comprend, un anticorps immobilisé dans un cristal liquide lyotrope, ou un gel en microémulsion, et des composants pour essais solubilisés ou susceptibles d'être solubilisés dans la phase micellaire inverse coexistante, pour la détermination d'un antigène ou d'un haptène, l'un et l'autre également solubilisés dans la phase micellaire inverse.

10. Réactif pour immunoessai selon la revendication 8, caractérisé en ce qu'il comprend, un anticorps ou un haptène, immobilisé dans le cristal liquide lyotrope ou dans le gel en microémulsion, ainsi que des anticorps solubilisés ou susceptibles d'être solubilisés dans la phase micellaire inverse coexistante, ainsi que d'autres composants pour essais pour la détermination d'un antigène ou d'un haptène, l'un et l'autre également solubilisés dans la phase micellaire inverse.

11. Réactif pour immunoessais selon la revendication 8, caractérisé en ce qu'il contient un agrégat d'agent tensio-actif en tant que cristal liquide lyotrope.

12. Kit pour immumnoessai, contenant un réactif pour immunoessai selon l'une quelconque des revendications 8 à 11.

13. Appareillage pour la chromatographie d'affinité ayant une phase mobile de solvant organique, ou une phase micellaire inverse, contenant, en tant que phase stationnaire pour l'immobilisation du produit actif de liaison, un cristal liquide lyotrope, ou un gel en microémulsion, ou bien un mélange à base soit d'un cristal liquide lyotrope, soit d'un gel en microémulsion et d'un support inerte conventionnel.

14. Appareillage selon la revendication 13, caractérisé en ce que ledit appareillage comprend, une colonne de chromatographie, un plaque de micro-titrage ou bien encore tout autre récipient d'incubation.

15. Procédé de chromatographie d'affinité ayant une phase mobile de solvant organique, ou une phase micellaire inverse, caractérisé en ce qu'est utilisé pour l'immobilisation de produits actifs de liaison, en tant que phase stationnaire, soit un cristal liquide lyotrope, soit un gel en microémulsion, ou bien un mélange à base soit d'un cristal liquide lyotrope, soit d'un gel en microémulsion et d'un support inerte conventionnel, qui coexiste avec la phase de solvant organique ou avec la phase micellaire inverse, dans laquelle le membre de liaison à déterminer est solubilisé, une quantification ou une purification supplémentaire étant effectuée, soit dans cette phase mobile, ou après la séparation de la phase stationnaire ou bien dans la phase stationnaire.

16. Procédé selon la revendication 15, caractérisé en ce que ledit procédé est utilisé de façon connue pour la réalisation d'essais immunologiques, d'examens de liaison et de purifications préparatives.

17. Procédé selon l'une quelconque des revendications 15 et 16, caractérisé en ce qu'un essai immunologique hétérogène est effectué avec ledit procédé de chromatographie d'affinité, et une quantification est réalisée du(des) produit(s) lié(s) à la phase stationnaire d'une manière immunospécifique, en transformant, après la séparation de la phase mobile de la phase stationnaire, la phase stationnaire en une phase liquide, en y ajoutant des produits additionnels ou bien en variant la température ou la pression.

18. Procédé selon l'une quelconque des revendications 15 à 17, caractérisé en ce que pour la réalisation d'un essai immunologique, un anticorps est immobilisé dans le cristal liquide lyotrope ou dans le gel en microémulsion, et pour la détermination d'un antigène ou d'un haptène, l'un et l'autre, également solubles dans la phase de solvant organique, on utilise un conjugué d'haptène marqué ou un conjugué d'antigène marqué solubles dans la phase coexistante de solvant organique.

19. Procédé selon l'une quelconque des revendications 15 à 17, caractérisé en ce que pour la réalisation d'un essai immunologique, un anticorps est immobilisé dans le cristal liquide lyotrope, ou dans le gel en microémulsion ainsi que des composants immunoessais solubilisés, ou susceptibles d'être solubilisés, dans la phase micellaire inverse coexistante, sont utilisés pour la détermination d'un antigène ou d'un haptène, l'un et l'autre, également solubilisés dans la phase micellaire inverse.

20. Procédé selon l'une quelconque des revendications 15 à 17, caractérisé en ce que pour la réalisation d'un essai immunologique, un antigène ou un haptène est immobilisé dans le cristal liquide lyotrope ou dans le gel en microémulsion, et pour la détermination d'un antigène ou d'un haptène, l'un et l'autre, également solubilisés dans la phase coexistante micellaire, des anticorps et d'autres composants immunoessais solubilisés, ou susceptibles d'être solubilisés, dans la phase micellaire inverse coexistante, sont utilisés.

21. Procédé selon l'une quelconque des revendications 15 et 16, caractérisé en ce qu'avec le procédé de chromatographie d'affinité se réalise un procédé de purification, pendant lequel est effectuée la purification d'un produit lié, spécifiquement selon son affinité, à la phase stationnaire, en transformant, à la suite de la séparation de la phase mobile de la phase stationnaire, la phase stationnaire dans une phase liquide, en y ajoutant des produits additionnels ou bien en variant la température ou la pression.

22. Procédé selon l'une quelconque des revendications 15, 16 et 21, caractérisé en ce que pour la réalisation d'un procédé de purification par chromatographie d'affinité, l'un des membres réactifs, actif de liaison est immobilisé dans le cristal liquide lyotrope ou dans le gel en microémulsion, et l'autre membre réactif est séparé d'une façon spécifique de la phase coexistante de solvant, ou de la phase micellaire inverse.

23. Procédé selon l'une quelconque des revendications 15 à 17 et 21, caractérisé en ce que la détermination du membre de liaison à examiner est effectuée, dans la phase stationnaire, en dissolvant le cristal liquide lyotrope ou le gel en microémulsion, en mettant à profit la formation ou la libération d'un colorant détectable.

24. Procédé selon l'une quelconque des revendications 15 à 23, caractérisé en ce qu'un mélange à base soit d'un cristal liquide lyotrope ou soit d'un gel en microémulsion ainsi que d'un support conventionnel solide est utilisé.
